# EUROPEAN PATENT APPLICATION

(11) **EP 3 057 199 A1**
(43) Date of publication of application: **17.08.2016**
(21) Application number: 15187144.9
(22) Date of filing: 28.09.2015
(51) Int. Cl.: H02J 9/06, H04L 12/10

(54) **POWER SUPPLY SYSTEM**

(30) Priority: 16.02.2015 TW 104105396
(71) Applicant: Compal Broadband Networks Inc., Neihu Dist Taipei City 114 (TW)
(72) Inventor: Chou, Yu-Te, Zhubei City, Hsinchu County 302 (TW); Wu, Jin-Cheng, Zhubei City, Hsinchu County 302 (TW)
(74) Representative: Becker Kurig Straus

(57) **Abstract**

A power supply system (10) includes a power supply unit (102), an electronic device (104) and a battery module (106). The power supply unit (102) is used for converting an alternating current (VAC) power into a direct current (VDC) power and outputting the DC power. The battery module (106), coupled between the power supply unit(102) and the electronic device (104), is used for receiving the DC power and outputting power information (PI) to the electronic device(104) according to a power supply status of the DC power.

## Description

### Field of the Invention

The present invention relates to a power supply system, and more particularly, to a power supply system receiving an external power.

### Background of the Invention

Cable modems provide media for the network cloud and household electric products to perform communications. Many commercially available cable modems are equipped with phone functionalities. Also, several countries regulate that the devices having phone functionalities should be capable of emergency call services when a power outage occurs; hence, the cable modems always include batteries, and thus emergency call services are still available during power outage. In addition, as for the cable modems without phone functionalities, there is no requirement for built-in batteries, where the deployment of batteries may not only increase the cost and volume, but also result in issues of safety and/or environmental protection.

Therefore, the industry provides a type of cable modem which can be externally connected to batteries. When the cable modem has to operate during power outage, it may be connected to an external battery. The cable modem may also operate alone without the battery in general. However, when the cable modem is connected to the external battery, there is no communication mechanism between the cable modem and the battery, such that the cable modem may not know the status of the battery, and the battery may not know the status of the cable modem as well. When the power outage occurs, the cable modem may not know the occurrence of power outage and will continuously draw currents from the battery. The server connected to the cable modem may not know the occurrence of power outage, and may keep data transmissions with the cable modem, which consumes a large amount of power. In such a situation, the external battery should possess a large capacity to prevent the cable modem from losing efficacy quickly. As a result, the cost of battery may increase significantly.

Thus, there is a need to provide an external battery and a power supply system for the cable modem, allowing the cable modem to obtain information of power outage or insufficient system power via the external battery. The cable modem can thereby perform corresponding operations.

### Summary of the Invention

The present invention aims at providing a power supply system in order to solve the abovementioned problems.

This is achieved by a power supply system according to claim 1. The dependent claims pertain to corresponding further developments and improvements.

As will be seen more clearly from the detailed description following below, the claimed power supply system comprises a power supply unit for converting an alternating current (AC) power into a direct current (DC) power and outputting the DC power; an electronic device; and a battery module coupled between the power supply unit and the electronic device, for receiving the DC power and outputting power information to the electronic device according to a power supply status of the DC power.

### Brief Description of the Drawings

FIG. 1 is a schematic diagram of a power supply system according to an embodiment of the present invention.
FIG. 2 is a schematic diagram of an implementation of the power supply system.
FIG. 3 is a schematic diagram of another implementation of the power supply system.
FIG. 4 is a schematic diagram of a further implementation of the power supply system.

### Detailed Description

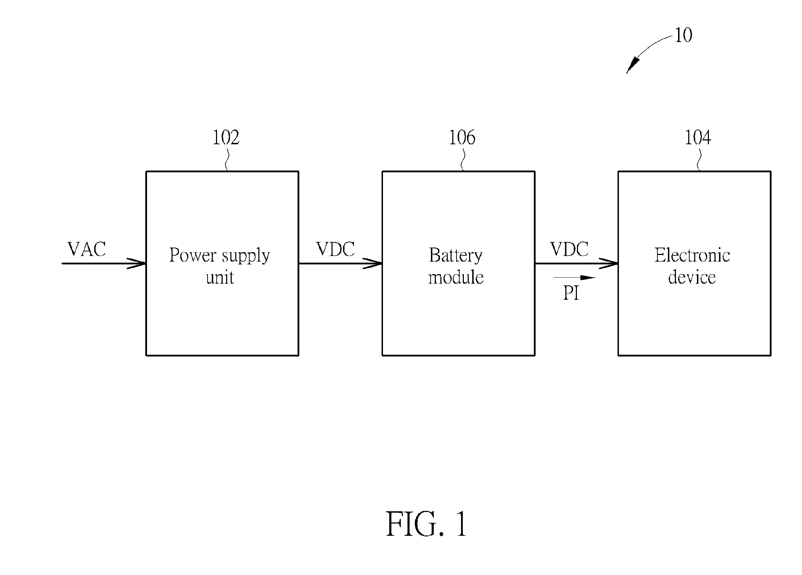

FIG. 1 is a schematic diagram of a power supply system 10 according to an embodiment of the present invention. As shown in FIG. 1, the power supply system 10 includes a power supply unit 102, an electronic device 104 and a battery module 106. The power supply unit 102 may convert an alternating current (AC) power VAC into a direct current (DC) power VDC, and output the DC power VDC to the battery module 106. The electronic device 104 may operate by receiving the DC power VDC via the battery module 106. The battery module 106, coupled between the power supply unit 102 and the electronic device 104, is used for receiving the DC power VDC and outputting power information PI to the electronic device 104 according to a power supply status of the DC power VDC.

In detail, in contrast to the conventional battery which provides power for the power receiving device only, the battery module 106 of the present invention not only provides the DC power VDC for the electronic device 104, but also communicates with the electronic device 104 with transmissions of the power information PI. In an embodiment, the power information PI may indicate whether the battery module 106 accurately receives the DC power VDC from the power supply unit 102, i.e., whether the DC power VDC is normally supplied. When the DC power VDC is normally supplied, the battery module 106 may receive the DC power VDC from the power supply unit 102; hence, the DC power VDC may be transferred to the electronic device 104 as the supplied power. When the DC power VDC cannot be normally supplied (e.g., the power outage occurs), the battery module 106 may not receive the DC power VDC from the power supply unit 102; hence, the battery module 106 may transmit the stored charges to the electronic device 104 as the supplied power. In such a situation, the battery module 106 may notify the electronic device 104 that its transmitted power is the DC power VDC received from the power supply unit 102 or the power stored in the battery via the power information PI, and the electronic device 104 may perform corresponding operations according to indications of the power information PI. For example, the electronic device 104 may determine whether to enter a power saving mode according to the power information PI; that is, the electronic device 104 may enter a power saving mode to extend its life when the power information PI indicates that the battery module 106 supplies power with the charge stored in the battery. If the electronic device 104 is a cable modem having built-in phone functionalities, the cable modem may disable its data transmission services in the power saving mode, while allowing the user to make an emergency call, e.g., a voice communication on a public switched telephone network (PSTN).

It is to be noted that the electronic device 104 and the battery module 106 are connected to each other via a DC power interface only; hence, the power information PI should be transmitted on the DC power interface. More specifically, the battery module 106 may transmit the DC power VDC to the electronic device 104 via the DC power interface, to supply power for the electronic device 104. In addition, the DC power interface may also be used for transmitting the power information PI, to indicate the power supply status of the DC power VDC.

In addition to indicating that the power transmitted by the battery module 106 is the DC power VDC received from the power supply unit 102 or the power stored in the battery, the power information PI may also be used for inform the electronic device 104 of other information, such as insufficient quantity of electricity in the battery and/or overheating of the battery module 106.

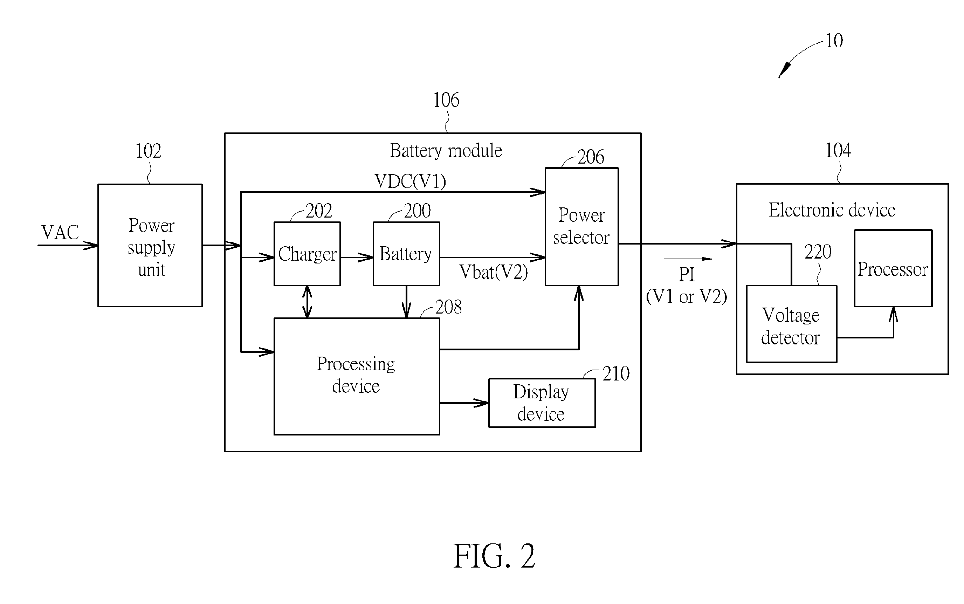

In an embodiment, the battery module 106 may transmit different voltages as the power information PI on the DC power interface, in order to indicate the power supply status of the DC power VDC. As an example, FIG. 2 is a schematic diagram of an implementation of the power supply system 10. As shown in FIG. 2, the battery module 106 includes a battery 200, a charger 202, a power selector 206 and a processing device 208. The battery 200 is used for storing electric charges and outputting a battery power Vbat according to the stored quantity of electricity. The battery module 106 includes only one battery 200, but in other embodiments, a battery module may include multiple batteries; this is not limited to what is described herein. The charger 202, coupled to the battery 200, is used for receiving the DC power VDC to charge the battery 200. The power selector 206, coupled to the battery 200 and the power supply unit 102, may receive the battery power Vbat from the battery 200 and receive the DC power VDC from the power supply unit 102, for selecting to output the DC power VDC or the battery power Vbat to the electronic device 104. The battery power Vbat may use a voltage different from the DC power VDC, so that the electronic device 104 may obtain the power supply status of the DC power VDC according to the received voltage. In other words, the electronic device 104 determines whether the power outputted by the battery module 106 comes from the power supply unit 102 or the battery 200. The processing device 208, coupled to the power selector 206, the charger 202 and the battery 200, is used for controlling operations of the power selector 206 according to the power supply status of the DC power VDC. More specifically, the processing device 208 may process every operation of the battery module 106. In an embodiment, the processing device 208 may control the operations of the power selector 206 or the charger 202 according to the quantity of electricity in the battery 200. For example, the processing device 208 may control the charger 202 to stop charging the battery 200 when the quantity of electricity in the battery 200 is full, or control the power selector 206 to stop outputting the battery power Vbat when the quantity of electricity in the battery 200 is used up. In an embodiment, the battery module 106 may include a display device 210, for displaying the battery status. For example, the quantity of electricity as a percentage in the battery module 106 may be displayed on a screen, or a light, e.g., a light-emitting diode (LED), may be applied to indicate the power supply status of the DC power VDC or the power storage status of the battery 200. The processing device 208 may also be used for controlling operations of the display device 210.The abovementioned processing device 208 may be a central processing unit (CPU), a microprocessor, a micro controller unit (MCU) or other type of processing device.

In this case, the DC power VDC and the battery power Vbat have different voltages, and the voltage difference may be regarded as the power information PI. Therefore, the electronic device 104 may include a voltage detector 220, disposed on the power input terminal of the electronic device 104, for receiving the power information PI, so that the processor of the electronic device 104 may determine whether the electronic device 104 receives the DC power VDC or the battery power Vbat from the battery module 106 according to the voltage included in the power information PI.

In detail, when the DC power VDC supplies power normally, the battery module 106 may receive the DC power VDC from the power supply unit 102; hence, the processing device 208 may control the power selector 206 to output the DC power VDC to the electronic device 104, and the outputted DC power VDC has a voltage V1. When the DC power VDC cannot supply power normally (e.g., when a power outage occurs), the battery module 106 cannot receive the DC power VDC from the power supply unit 102; hence, the processing device 208 may control the power selector 206 to output the battery power Vbat to the electronic device 104, and the outputted battery power Vbat has a voltage V2. The battery module 106 may be configured so that the voltage V2 of the battery power Vbat is different from the voltage V1 of the DC power VDC. In such a situation, the power information PI may include information that the input voltage is V1 or V2. When the DC power VDC or the battery power Vbat is transmitted to the electronic device 104, the voltage detector 220 may detect the voltage of the received power and determine whether the power is the DC power VDC or the battery power Vbat, and the electronic device 104 may perform corresponding operations accordingly. For example, when the voltage detector 220 determines that the received voltage is V1, i.e., the power information PI indicates that the power inputted to the electronic device 104 is the DC power VDC, the electronic device 104 may obtain a message indicating that the DC power VDC supplies power normally in the power information PI. In such a situation, the electronic device 104 may operate in a normal mode. When the voltage detector 220 determines that the received voltage is V2, i.e., the power information PI indicates that the power inputted to the electronic device 104 is the battery power Vbat, the electronic device 104 may obtain a message indicating that the DC power VDC cannot supply power normally in the power information PI. In such a situation, the electronic device 104 may enter a power saving mode.

It is to be noted that the battery module 106 may also inform the electronic device 104 of other messages by outputting other different voltages. For example, the power selector 206 may output a voltage V3 to the electronic device 104 to indicate that the battery 200 is overheating, or output a voltage V4 to the electronic device 104 to indicate that the battery 200 is damaged and should be replaced. In another embodiment, the voltage V2 of the battery power Vbat may directly correspond to the quantity of electricity stored in the battery 200. For example, the range of the voltage V2 may be between 3V and 5V. When the quantity of electricity in the battery 200 is near full, the battery module 106 may output the voltage V2 approximating 5V, and when the quantity of electricity in the battery 200 is almost used up, the battery module 106 may output the voltage V2 approximating 3V. The electronic device 104 then determines whether to enter the power saving mode according to the voltage V2 of the battery module 106.

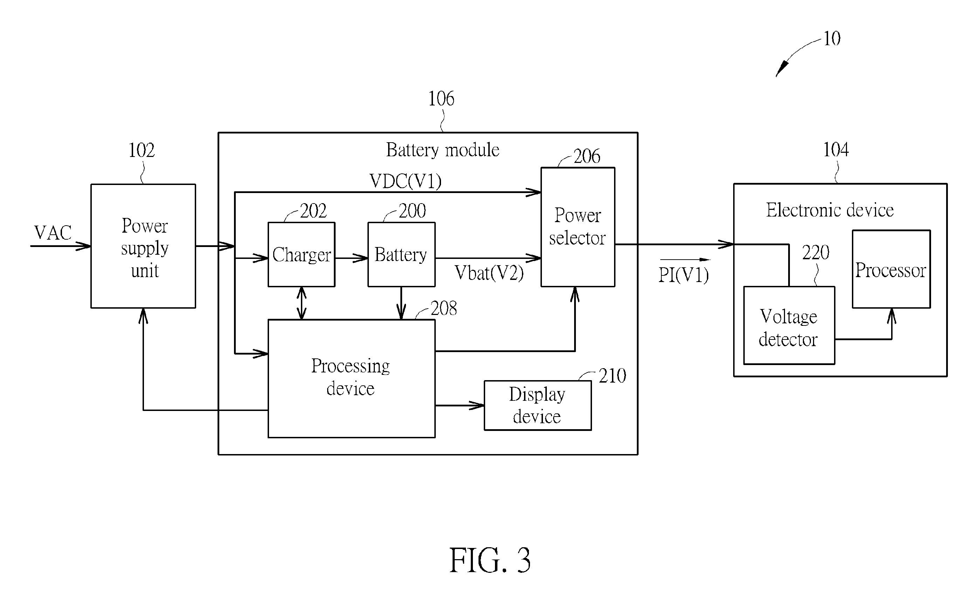

In another embodiment, the DC power VDC outputted by the battery module 106 may also include different voltages to carry different power information PI. For example, FIG. 3 is a schematic diagram of another implementation of the power supply system 10. The structure of the power supply system 10 shown in FIG. 3 is similar to the structure of the power supply system 10 shown in FIG. 2; hence, the elements or signals having the same functions are denoted by the same symbols. The main difference between the power supply system 10 shown in FIG. 3 and the power supply system 10 shown in FIG. 2 is that the processing device 208 in the power supply system 10 of FIG. 3 is further coupled to the power supply unit 102, to control the magnitude of the voltage V1 of the DC power VDC outputted by the battery module 106, according to the status of the battery module 106. At this moment, the power selector 206 may select to output the DC power VDC to deliver the power information PI carried in the voltage V1 of the DC power VDC to the electronic device 104. It is notable that the power supply unit 102 may be disposed in the power supply system 10 alone, or may be integrated into the battery module 106. In such a situation, the battery module 106 may receive the AC power VAC externally, and the processing device 208 may control the operations of the battery module 106 with control signals inside the battery module 106.

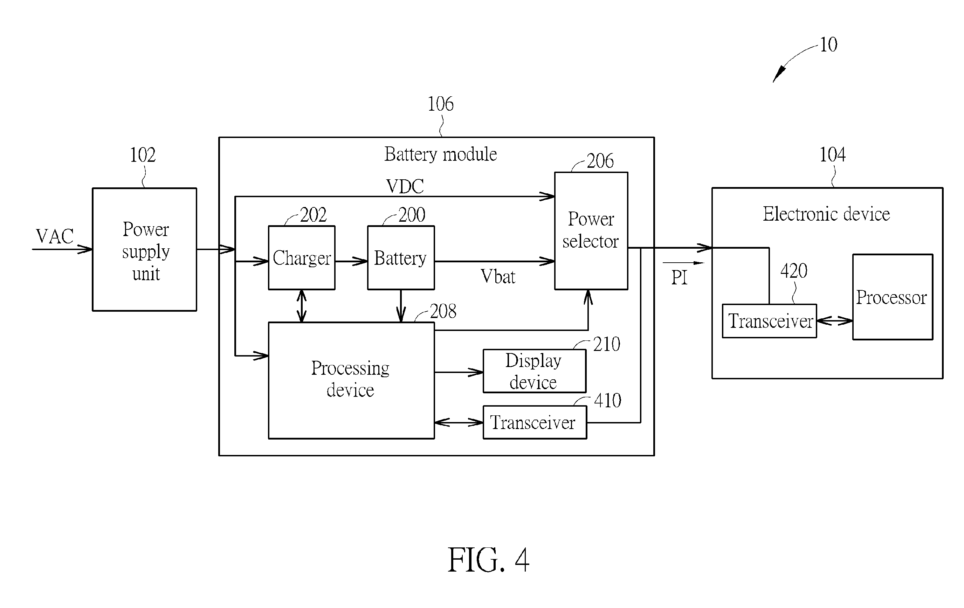

The above embodiments use the output voltage level to carry the power information PI, but in other embodiments, the power information PI may be transmitted to the electronic device 104 by other methods. For example, FIG. 4 is a schematic diagram of a further implementation of the power supply system 10. The structure of the power supply system 10 shown in FIG. 4 is similar to the structure of the power supply system 10 shown in FIG. 2; hence, the elements or signals having the same functions are denoted by the same symbols. The main difference between the power supply system 10 shown in FIG. 4 and the power supply system 10 shown in FIG. 2 is that in the power supply system 10 shown in FIG. 4, the battery module 106 further includes a transceiver 410, for transmitting the power information PI to the electronic device 104 via a DC power interface. Correspondingly, the electronic device 104 may use another transceiver 420 to receive the power information PI. The processor of the electronic device 104 may determine whether the electronic device 104 receives the DC power VDC or the battery power Vbat from the battery module 106 according to the power information PI. In such a situation, the electronic device 104 does not require any voltage detector.

In an embodiment, each of the transceivers 410 and 420 may be a universal asynchronous receiver transmitter (UART) for performing signal transmission according to the communication protocol of UART. For example, the transceiver 410 may apply a data format specified by the UART, where the power information PI is included in a group of data bits, and each data bit group is sent to the transceiver 420 at regular intervals, to inform the electronic device 104 of the present power supply status. Alternatively, the transceiver 410 may transmit a group of data bits including the power information PI to the transceiver 420 only when the power supply status changes. The electronic device 104 then performs corresponding operations, e.g., enters the power saving mode, according to the power information PI.

It is to be noted that the present invention is capable of performing data transmission on the DC power interface between the battery module and the electronic device, allowing the electronic device to obtain information such as power outage or insufficient system power, in order to enter the power saving mode to reduce power consumption when power supply capability is not enough. Those skilled in the art can make modifications and alternations accordingly. For example, the electronic device of the present invention may be a cable modem, or may be another type of electronic device, which is not limited to what is described herein. In other words, any electronic device that requires power supply may enter the power saving mode to save power when the system power is not enough. In the power saving mode, several functions may be enabled or disabled, or the brightness of display device may be adjusted; this is not limited to what is described herein. Furthermore, the above power information PI is always transmitted to the electronic device 104 from the battery module 106, to indicate the power supply status of the DC power VDC. In another embodiment, the electronic device 104 may also transmit a response to the battery module 106 to indicate whether the electronic device 104 successively obtains the power information PI, or transmit a message to request the battery module 106 to retransmit the power information PI if the electronic device 104 does not obtain the power information PI.

On the other hand, the battery module 106 may be an external battery module externally connected to the electronic device 104; this increases the flexibility in usage of the battery module 106. In contrast to the conventional electronic device equipped with a battery which always has a larger size and a higher weight, in the present invention, a user may determine whether to connect the electronic device to the battery module according to requirements or demands. When the external battery module is used, the electronic device 104 may still obtain the power information PI via the DC power interface, and then operate correspondingly.

In the prior art, when the conventional cable modem is connected to an external battery, there is no communication mechanism between the cable modem and the battery. When a power outage occurs, the cable modem may not know the occurrence of power outage and will continuously draw currents from the battery. The server connected with the cable modem may also not know the occurrence of power outage, and may keep data transmissions with the cable modem, resulting in a large amount of power consumption. In such a situation, the external battery should possess a large capacity to prevent the cable modem from losing efficacy quickly. In contrast, the power supply system of the present invention may perform data transmission on the DC power interface between the battery module and the electronic device, so that the electronic device may obtain the information of power outage or insufficient system power. Therefore, the electronic device may enter the power saving mode to save power when the supplied power is not enough.

## Claims

1. A power supply system (10), **characterized by** comprising:
a power supply unit (102), for converting an alternating current, hereinafter called AC, power (VAC) into a direct current, hereinafter called DC, power (VDC) and outputting the DC power (VDC);
an electronic device (104); and
a battery module (106), coupled between the power supply unit (102) and the electronic device (104), for receiving the DC power (VDC) and outputting power information (PI) to the electronic device (104) according to a power supply status of the DC power (VDC).

2. The power supply system (10) of claim 1, **characterized in that** the power information (PI) indicates whether the battery module (106) receives the DC power (VDC) from the power supply unit (102).

3. The power supply system (10) of claims 1-2, **characterized in that** the electronic device (104) and the battery module (106) are connected to each other via a DC power interface only, and the DC power interface is used for transmitting the power information (PI).

4. The power supply system (10) of claims 1-3, **characterized in that** power needed by the electronic device (104) is supplied from the DC power (VDC).

5. The power supply system (10) of claims 1-4, **characterized in that** the battery module (106) comprises:
at least one battery (200), for outputting battery power (Vbat) according to a quantity of electricity stored in the at least one battery (200);
a charger (202), coupled between the at least one battery (200) and the power supply unit (102), for receiving the DC power (VDC) to charge the at least one battery (200);
a power selector (206), coupled to the at least one battery (200) and the power supply unit (102), for selecting to output the DC power (VDC) or the battery power (Vbat) to the electronic device (104); and
a processing device (208), coupled to the power selector (206), for controlling operations of the power selector (206) according to the power supply status of the DC power (VDC).

6. The power supply system (10) of claim 5, **characterized in that** the processing device (208) is further coupled to the charger (202) and the at least one battery (200), for controlling operations of the power selector (206) or the charger (202) according to the quantity of electricity stored in the at least one battery (200).

7. The power supply system (10) of claims 5-6, **characterized in that** the battery module (106) outputs the DC power (VDC) having a first voltage (V1) to the electronic device (104) when the battery module (106) receives the DC power (VDC) from the power supply unit (102), and outputs the battery power (Vbat) having a second voltage (V2) to the electronic device (104) when the battery module (106) does not receive the DC power (VDC) from the power supply unit (102);
wherein the first voltage (V1) is different from the second voltage (V2).

8. The power supply system (10) of claim 7, **characterized in that** the power information (PI) comprises the first voltage (V1) or the second voltage (V2), and the electronic device (104) further comprises:
a voltage detector (220), for receiving the power information (PI), to determine whether the electronic device (104) receives the DC power (VDC) or the battery power (Vbat) from the battery module (106) according to a voltage of the power information (PI).

9. The power supply system (10) of claims 7-8, **characterized in that** a magnitude of the second voltage (V2) corresponds to the quantity of electricity stored in the at least one battery (200).

10. The power supply system (10) of claims 7-9, **characterized in that** the processing device (208) is further coupled to the power supply unit (102), for controlling a magnitude of the first voltage (V1) according to a status of the battery module (106).

11. The power supply system (10) of claims 1-4, **characterized in that** the battery module (106) further comprises:
a first transceiver (410), for transmitting the power information (PI) to the electronic device (104).

12. The power supply system (10) of claim 11, **characterized in that** the electronic device (104) further comprises:
a second transceiver (420), for receiving the power information (PI) from the battery module (106), to determine whether the electronic device (104) receives the DC power (VDC) or a battery power (Vbat) from the battery module (106) according to the power information (PI).

13. The power supply system (10) of claim 12, **characterized in that** each of the first transceiver (410) and the second transceiver (420) is a universal asynchronous receiver transmitter.

14. The power supply system (10) of claims 1-13, **characterized in that** the electronic device (104) determines whether to enter a power saving mode according to the power information (PI).

15. The power supply system (10) of claims 1-14, **characterized in that** the battery module (106) is an external battery module externally connected to the electronic device (104), and the electronic device (104) is a cable modem.
